# EUROPÄISCHE PATENTSCHRIFT

(11) **EP 1 215 809 B1**
(45) Veröffentlichungstag und Bekanntmachung des Hinweises auf die Patenterteilung: **23.03.2005**
(21) Anmeldenummer: 01811201.1
(22) Anmeldetag: 10.12.2001
(51) Int. Cl.: H02M 7/48

(54) **Stromrichtersystem zur Erhöhung einer Gleichspannung**
Power converter sytem for generating a DC voltage
Convertisseur de puissance pour la génération d'une tension continue

(30) Priorität: 18.12.2000 EP 00811204
(43) Veröffentlichungstag der Anmeldung: 19.06.2002
(73) Patentinhaber: ABB Schweiz AG, 5400 Baden (CH)
(72) Erfinder: Steimer, Peter, 5424 Unterehrendingen (CH)
(74) Vertreter: ABB Patent Attorneys

(56) Entgegenhaltungen:
- EP-A- 0 534 242
- EP-A- 0 630 099
- DE-A- 19 620 906
- SONG I -H ET AL: "A NOVEL THREE-LEVEL ZVS PWM INVERTER TOPOLOGY FOR HIGH-VOLTAGE DC/DC CONVERSION SYSTEMS WITH BALANCED VOLTAGE SHARING AND WIDER LOAD RANGE" CONFERENCE RECORD OF THE IEEE INDUSTRY APPLICATIONS CONFERENCE ANNUAL MEETING (IAS),US,NEW YORK, IEEE, Bd. MEETING 31, 6. Oktober 1996 (1996-10-06), Seiten 973-979, XP000731223 ISBN: 0-7803-3545-7
- GULES R ET AL: "SWITCHED-MODE THREE-PHASE THREE-LEVEL TELECOMMUNICATIONS RECTIFIER" COPENHAGEN, JUNE 6 - 9, 1999,NEW YORK, NY: IEEE,US, 6. Juni 1999 (1999-06-06), Seiten 29-3-01-07, XP000868436 ISBN: 0-7803-5625-X
- MANIAS S N ET AL: "MODULAR DC-DC CONVERTOR FOR HIGH-OUTPUT VOLTAGE APPLICATIONS" IEE PROCEEDINGS B. ELECTRICAL POWER APPLICATIONS,GB,INSTITUTION OF ELECTRICAL ENGINEERS. STEVENAGE, Bd. 140, Nr. 2 PART B, 1. März 1993 (1993-03-01), Seiten 97-102, XP000364989

## Beschreibung

### Technisches Gebiet

Die Erfindung bezieht sich auf das Gebiet der Leistungselektronik. Sie geht aus von einem Stromrichtersystem zur Erhöhung einer Gleichspannung und einem Windenergiesystem gemäss dem Oberbegriff der unabhängigen Ansprüche. Ein Stromrichtersystem mit den Merkmalen des Oberbegriffs der unabhängigen Ansprüche ist aus der Konferenzmitschrift "A switched-mode three-phase three-level telecommunications rectifier" bekannt geworden.

### Stand der Technik

Zur Erhöhung einer Gleichspannung sind eine Fülle von Schaltungssystemen, insbesondere herkömmliche Stromrichtersysteme bekannt. Ein geeignetes Stromrichtersystem ist beispielsweise in US 4,462,070 offenbart. Das darin beschriebene Stromrichtersystem dient insbesondere der Kopplung zweier elektrischer Netze. Am Eingang weist das Stromrichtersystem nach US 4,462,070 dazu einen Gleichspannungskreis auf, der durch zwei in Reihe geschaltete Gleichspannungskapazitäten gebildet ist, die an einem Mittelpunktanschluss zusammengeschaltet sind. Darüber hinaus ist mit dem Gleichspannungskreis ein Spannungswechselrichter verbunden, der als einphasige Brückenschaltung zur Schaltung zweier Spannungsniveaus der Gleichspannung des Gleichspannungskreises ausgeführt ist und der der Erzeugung einer Wechselspannung durch entsprechendes Ansteuern der Schaltelemente des Spannungswechselrichters dient. Weiterhin ist der Ausgang des Spannungswechselrichters und der Mittelpunktanschluss jeweils mit einem Anschluss der Primärseite eines Transformators verbunden. An der Sekundärseite des Transformators ist ein Umrichter angeschlossen, der der Einstellung eines variablen lastabhängigen Gleichstromes eines an den Ausgang des Umrichters angeschlossenen und durch eine Induktivität gebildeten Ausgangskreises dient. Der Ausgangskreis ist über einen gemeinsamen Anschluss des Spannungswechselrichters und des Gleichspannungskreises direkt mit dem Gleichspannungskreis gekoppelt. Eine zusätzliche Kopplung des Ausgangskreises mit dem Gleichspannungskreis ist durch den Umrichter gegeben, der an einen weiteren gemeinsamen Anschluss des Spannungswechselrichters und des Gleichspannungskreises angeschlossen ist.

Mit dem Stromrichtersystem nach US 4,462,070 ist die bereits erwähnte Einstellung eines variablen lastabhängigen Gleichstromes möglich. Jedoch ist der Leitungsaufwand durch die verschiedenen Kopplungen des Gleichspannungskreises mit dem Ausgangskreis gross und verursacht erhebliche Materialkosten. Des weiteren ist mit dem Umrichter zwar eine Einstellung eines lastabhängigen Gleichstromes möglich, nicht jedoch eine Einstellung einer variablen lastunabhängigen Gleichspannung am Ausgangskreis. Weiterhin dient die Induktivität des Ausgangskreises als Energiespeicher, sie verursacht jedoch durch ihre grosse und aufwendige Bauweise zusätzliche Materialkosten und benötigt entsprechend viel Platz. Darüber hinaus ermöglicht der Spannungswechselrichter die Erzeugung einer Wechselspannung, jedoch werden dadurch, dass nur zwei Spannungsniveaus der Gleichspannung des Gleichspannungskreises geschaltet werden können, erhebliche Oberschwingungen in der erzeugten Wechselspannung verursacht, die unerwünscht sind. Ferner ist durch die Spannungsfestigkeit der Schaltelemente des Spannungswechselrichters die zu übertragende Leistung von einem elektrischen Netz zum anderen beschränkt, da die Schaltelemente des Spannungswechselrichters mindestens gegenüber dem Wert der Gleichspannung des Gleichspannungskreises spannungsfest ausgeführt sein müssen. Entsprechende Schaltelemente, welche eine genügend hohe Spannungsfestigkeit besitzen sind zwar allgemein bekannt, jedoch sind solche Schaltelemente teuer und benötigen aufwendige Zusatzbeschaltungen.

Bei Windenergiesystemen, die heute aufgrund schwindender Energieressourcen verstärkt als alternative Energielieferanten eingesetzt werden, werden Übertragungssysteme, insbesondere Gleichspannungsübertragungssystem, wie beispielsweise lange Gleichspannungskabel zur Übertragung der elektrischen Energie benötigt. Ein derartiges Windenergiesystem ist in DE 196 20 906 C2 offenbart. Darin umfasst das Windenergiesystem mindestens eine Windenergieanlage, wobei jede Windenergieanlage einen von einem Rotor angetriebenen Generator aufweist, der über eine Gleichrichtereinheit mit einem Gleichspannungsübertragungssystem verbunden ist. Das Gleichspannungsübertragungssystem ist mit einer Stromrichtemetzkopplungsstation verbunden, die über einen Netztransformator an ein gängiges elektrisches Versorgungsnetz angekoppelt ist.

Bei einem Windenergiesystem nach DE 196 20 906 C2 ist das Gleichspannungsübertragungssystem verlustbehaftet, insbesondere wenn hohe Leistungen, hervorgerufen durch den Einsatz mehrere Windkraftanlagen, zu übertragen sind. Diese Verluste erhöhen sich drastisch, wenn das Gleichspannungsübertragungssystem beispielsweise eine lange Gleichspannungsleitung aufweist, wie sie gängigerweise bei Off-Shore-Systemen, aufgrund der langen Distanz zwischen den Windkraftanlagen im Meer bis zum Land, eingesetzt wird. Ein geeignetes Windenergiesystem zur Lösung dieser Probleme ist derzeit nicht bekannt.

### Darstellung der Erfindung

Aufgabe der Erfindung ist es deshalb, ein Stromrichtersystem zur Erhöhung einer Gleichspannung anzugeben, das besonders einfach und kostengünstig aufgebaut ist und ermöglicht, eine hohe Leistung zu übertragen. Ferner ist ein Windenergiesystem derart weiterzubilden, dass eine Übertragung elektrischer Energie von Windkraftanlagen des Windenergiesystems mit hoher Leistung über ein Gleichspannungsübertragungssystem zu einem elektrischen Versorgungsnetz möglichst verlustarm und mit geringem Schaltungsaufwand erfolgt. Diese Aufgaben werden durch die Merkmale des Anspruchs 1 und 2 gelöst. In den Unteransprüchen sind vorteilhafte Weiterbildungen der Erfindung angegeben.

Das erfindungsgemässe Stromrichtersystem weist einen ersten Spannungswechselrichter auf, dessen erster und zweiter Eingangsanschluss mit einem Gleichspannungskreis verbunden ist, der durch mindestens zwei in Reihe geschaltete Gleichspannungskapazitäten gebildet ist, die an einem Mittelpunktanschluss zusammengeschaltet sind. Erfindungsgemäss ist der Mittelpunktanschluss über einen dritten Eingangsanschluss des ersten Spannungswechselrichters mit einer Mittelpunktspannungsstufe des als Stufenschaltung zur Erzeugung dreier Schaltspannungsniveaus ausgebildeten ersten Spannungswechselrichters verbunden. Der Vorteil der Stufenschaltung und deren Verbindung mit dem Mittelpunktanschluss besteht darin, dass gegenüber einer einphasigen Brückenschaltung mit zwei möglichen Schaltspannungsniveaus mehr
Leistung übertragen kann, da die doppelte Gleichspannung des Gleichspannungskreises bei Schaltelementen mit gleicher Spannungsfestigkeit angelegt und geschaltet werden kann. Zudem wird eine vorteilhafte Reduktion der Oberschwingungen erzielt, da drei Schaltspannungsniveaus geschaltet werden können und somit ein exakterer sinusförmiger Verlauf der zu erzeugenden Wechselspannung generiert werden kann.

In einem Windenergiesystem mit mindestens einer Windenergieanlage, die je eine Gleichrichtereinheit aufweist, und mit einem Gleichspannungsübertragungssystem ist die Gleichrichtereinheit erfindungsgemäss über das Stromrichtersystem zur Erhöhung der Gleichspannung nach der Erfindung mit dem Gleichspannungsübertragungssystem verbunden. Dadurch wird äusserst vorteilhaft erreicht, dass eine Erhöhung der Gleichspannung, insbesondere der Übertragungsgleichspannung des Gleichspannungsübertragungssystems zur Übertragung einer grossen Leistung besonders einfach und mit einem sehr geringen Schaltungsaufwand durchgeführt werden kann, ohne dass Schaltelemente, insbesondere in der Gleichrichtereinheit für eine höhere Spannungsfestigkeit neu ausgelegt und eingesetzt werden müssen. Desweiteren wird durch die Erhöhung der Übertragungsgleichspannung vorteilhaft erreicht, dass eine Übertragung elektrischer Energie der Windkraftanlage des Windenergiesystems mit hoher Leistung mit minimalen Verlusten im Gleichspannungsübertragungssystem zu einem elektrischen Versorgungsnetz erfolgen kann.

Diese und weitere Aufgaben, Vorteile und Merkmale der vorliegenden Erfindung werden aus der nachfolgenden detaillierten Beschreibung eines bevorzugten Ausführungsbeispiels der Erfindung in Verbindung mit der Zeichnung offensichtlich.

### Kurze Beschreibung der Zeichnungen

Es zeigen:
- Fig. 1: eine erste Ausführungsform eines erfindungsgemässen Stromrichtersystems,
- Fig. 2: eine zweite Ausführungsform eines erfindungsgemässen Stromrichtersystems,
- Fig. 3a: eine dritte Ausführungsform eines erfindungsgemässen Stromrichtersystems,
- Fig. 3b: eine vierte Ausführungsform eines erfindungsgemässen Stromrichtersystems,
- Fig. 3c: eine fünfte Ausführungsform eines erfindungsgemässen Stromrichtersystems,
- Fig. 4: eine Ausführungsform einer erfindungsgemässen Stufenschaltung zur Erzeugung dreier Spannungsschaltstufen und
- Fig. 5: eine Ausführungsform eines erfindungsgemässen Windenergiesystems.

Die in der Zeichnung verwendeten Bezugszeichen und deren Bedeutung sind in der Bezugszeichentiste zusammengefasst aufgelistet. Grundsätzlich sind in den Figuren gleiche Teile mit gleichen Bezugszeichen versehen. Die beschriebene Ausführungsform steht beispielhaft für den Erfindungsgegenstand und hat keine beschränkende Wirkung.

### Wege zur Ausführung der Erfindung

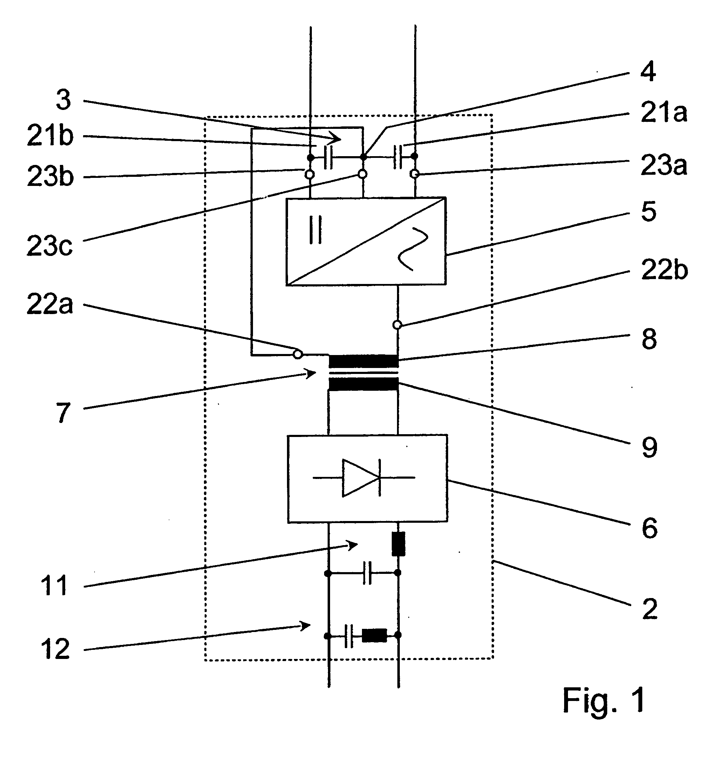

In Fig. 1 ist eine Ausführungsform eines erfindungsgemässen Stromrichtersystems zur Erhöhung einer Gleichspannung gezeigt. Das Stromrichtersystem gemäss Fig. 1 ist durch mindestens ein Teilstromrichtersystem 2 gebildet. Ein solches Teilstromrichtersystem 2 weist einen eingangseitigen Gleichspannungskreis 3 auf, der durch mindestens zwei in Reihe geschaltete Gleichspannungskapazitäten 21a, 21b gebildet ist, die als Energiespeicher dienen. Gemäss Fig. 1 sind zwei der Gleichspannungskapazitäten 21a, 21b zu einem Mittelpunktanschluss 4 zusammengeschaltet. Darüber hinaus ist der Gleichspannungskreis 3 erfindungsgemäss mit einem ersten und einem zweiten Eingangsanschluss 23a, 23b eines ersten Spannungsgleichrichters 5 verbunden, der der Erzeugung einer ausgangsseitigen Wechselspannung dient. Der Mittelpunktanschluss 4 ist mit einem ersten Anschluss 22a der Primärwicklung 8 eines Transformators 7 verbunden, dessen zweiter Anschluss 22b der Primärwicklung 8 an den Ausgang des ersten Spannungswechselrichters 5 angeschlossen ist. Gemäss Fig. 1 ist die Sekundärwicklung 9 des Transformators 7 mit dem Eingang eines zur Erzeugung einer ausgangsseitigen Gleichspannung vorgesehenen Umrichters 6 verbunden.

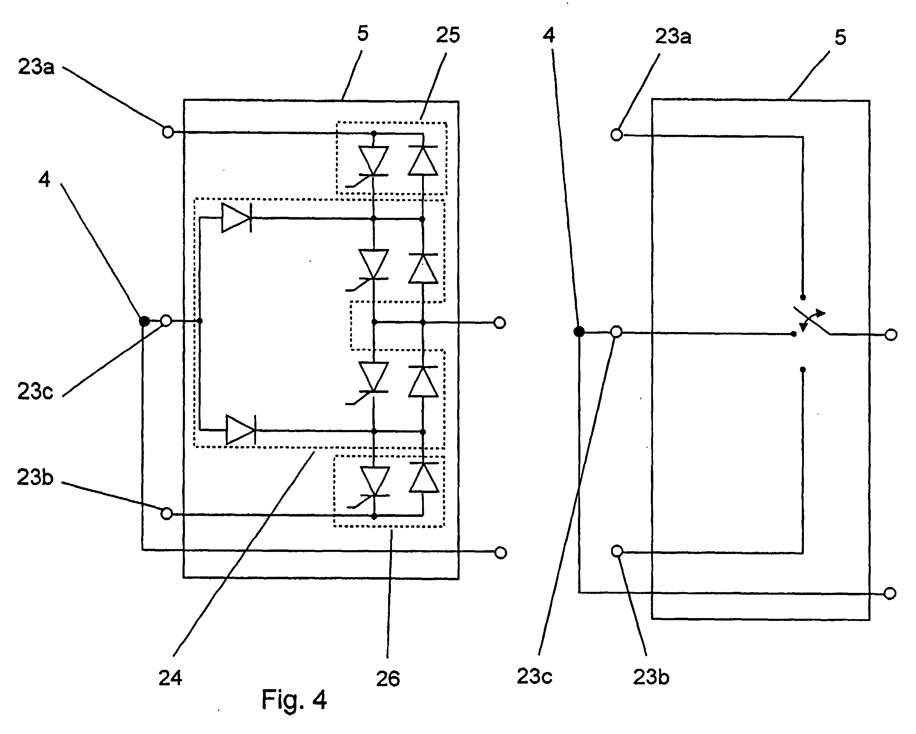

Erfindungsgemäss ist gemäss Fig. 1 der Mittelpunktanschluss 4 des Gleichspannungskreises 3 über einen dritten Eingangsanschluss 23c des ersten Spannungswechselrichters 5 mit einer Mittelpunktspannungsstufe 24 des als Stufenschaltung zur Erzeugung dreier Schaltspannungsniveaus ausgebildeten ersten Spannungswechselrichters 5 verbunden. In Fig. 4 ist eine Ausführungsform der Stufenschaltung gezeigt. Darin weist die Stufenschaltung die bereits erwähnte Mittelpunktspannungsstufe 24 auf, die der Erzeugung einer Nullschaltspannung dient. Zudem weist die Stufenschaltung gemäss Fig. 4 eine erste zur Erzeugung einer positiven Schaltspannung vorgesehenen Schaltstufe 25 und eine zweite zur Erzeugung einer negativen Schaltspannung vorgesehenen Schaltstufe 26 auf. Erfindungsgemäss ist die Mittelpunktspannungsstufe 24 gemäss Fig. 4 mit der ersten Schaltstufe 25 verbunden. Ferner ist der Gleichspannungskreis 3 über den ersten Eingangsanschluss 23a des Wechselrichters 5 mit der ersten Schaltstufe verbunden. Darüber hinaus ist die Mittelpunktspannungsstufe 24 mit der zweiten Schaltstufe 26 verbunden, wobei zusätzlich der Gleichspannungskreis 3 über den zweiten Eingangsanschluss 23b des ersten Spannungswechselrichters 5 mit der zweiten Schaltstufe 26 verbunden ist. Die Stufenschaltung des ersten Spannungswechselrichters 5 ist gemäss Fig. 4 mittels Leistungshalbleiterschalter, insbesondere passive Schaltelemente wie beispielsweise Dioden und/oder aktive Schaltelemente wie beispielsweise Thyristoren und/oder Bipolartransistoren mit isoliert angeordneter Gateelektrode, die ansteuerbar sind, realisiert. Desweiteren ist in Fig. 4 ein Prinzipschaltbild der Stufenschaltung mit idealisierten Schaltern dargestellt, die der Funktionsweise der elektrischen Schaltelemente entsprechen.

Es hat sich als besonders vorteilhaft erwiesen, die Schaltfrequenz der aktiven Schaftelemente des ersten Spannungswechselrichters 5 im Bereich zwischen 300 Hz und 2000 Hz zu wählen, um die durch die Schaltvorgänge der aktiven Schaltelemente generierten Oberschwingungen möglichst gering zu halten. Der Vorteil des als Stufenschaltung ausgebildeten ersten Spannungswechselrichters 5 liegt darin, dass zur Erzeugung der ausgangsseitigen Wechselspannung eine höhere Gleichspannung des Gleichspannungskreises 3 geschaltet werden kann, woraus in erwünschtem Masse eine höhere zu übertragende Leistung resultiert. Die Schaltelemente werden vorteilhafterweise nicht stärker belastet und müssen gegenüber einer herkömmlichen einphasigen Brückenschaltung mit zwei möglichen Spannungsniveaus nicht für eine höhere Spannungsfestigkeit ausgelegt werden. Zusätzlich ermöglicht die Stufenschaltung gemäss Fig. 4 eine Reduktion der Oberschwingungen, da drei Spannungsniveaus der Gleichspannung des Gleichspannungskreises 3 geschaltet werden können und somit ein exakterer sinusförmiger Verlauf der zu erzeugenden Wechselspannung erzielt wird.

Ferner ist der Umrichter 6 gemäss Fig. 1, der wie bereits erwähnt, eingansseitig mit dem Transformator 7 verbunden ist, als Spannungsgleichrichter zur Erzeugung einer ausgangsseitigen Gleichspannung ausgebildet, wodurch mit dem daran angeschlossenen Transformator 7 am Ausgang des Umrichters eine Gleichspannung erzeugt und vorteilhaft lastunabhängig variiert und insbesondere in gewünschtem Masse lastunabhängig gegenüber der Gleichspannung des Gleichspannungskreises erhöht werden kann. Vorzugsweise ist das Übersetzungsverhältnis zwischen der Primärseite 8 und der Sekundärseite 9 des Transformators 7 im Bereich zwischen 1:5 und 1:50 gewählt, so dass die Wechselspannung an der Sekundärseite 9 bezüglich der Wechselspannung an der Primärseite erhöht wird, woraus dann die gewünschte erhöhte Gleichspannung mittels des vorstehend beschriebene Umrichters 6 an dessen Ausgang generiert wird. Durch den Transformator 7 erfolgt weiterhin eine galvanische Trennung zwischen dem Gleichspannungskreis 3 und dem Ausgang des Umrichters 6, wodurch Leitungsmaterial eingespart werden kann, da keine weiteren Verbindungen zwischen dem Gleichspannungskreis 3 und dem Ausgang des Umrichters 6 vorgesehen sind.

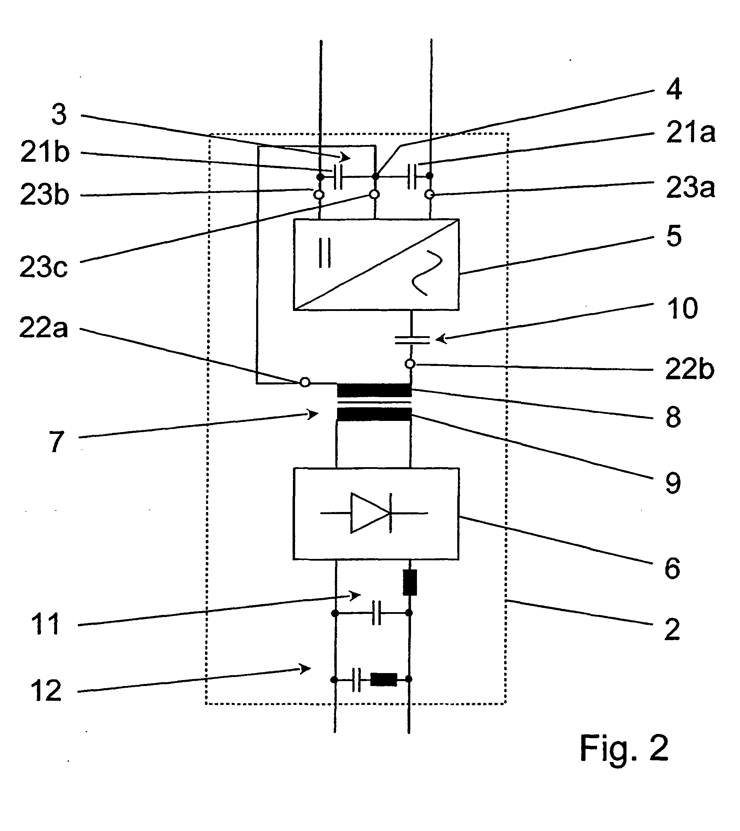

In Fig. 2 ist eine zweite Ausführungsform eines erfindungsgemässen Stromrichtersystems gezeigt, wobei sich diese durch die erste und vorstehend beschriebene Ausführungsform des Stromrichtersystems gemäss Fig. 1 dahingehend unterscheidet, dass der erste Spannungswechselrichter 5 des Teilstromrichtersystems 2 erfindungsgemäss über eine Resonanzkapazität 10 mit dem zweiten Anschluss 22b der Primärwicklung 8 des Transformators 7 verbunden ist. Diese Resonanzkapazität 10 dient vorteilhaft der Bildung eines Resonanzschwingkreises, womit ein weiches Schalten der Leistungshalbleiterschalterschalter des sten Spannungswechselrichters 5, insbesondere bei einer Nullspannung und oder einem Nullstrom, möglich ist.

Gemäss Fig. 1 und Fig. 2 ist bei dem Teilstromrichtersystem 2 des Stromrichtersystems der Ausgang des Umrichters 6 erfindungsgemäss mit einer Gleichspannungsfilterschaltung 11 zur Glättung der ausgangsseitigen Gleichspannung verbunden. Die Gleichspannungsfilterschaltung 11 weist dazu vorzugsweise eine Gleichspannungsfilterinduktivität und eine Gleichspannungsfilterkapazität auf. Ferner ist gemäss Fig.1 und Fig. 2 eine parallel zu der Gleichspannungsfilterschaltung 11 geschaltete Oberschwingungsfilterschaltung 12 vorgesehen, die einen Serienschwingkreis aufweist. Der Serienschwingkreis ist auf eine Oberschwingungsfrequenz, insbesondere auf die zweite harmonische Schwingung bezüglich der Grundschwingung der Wechselspannung am Ausgang des ersten Spannungswechselrichters 5 abgestimmt und dient der Filterung dieser Oberschwingung in der Gleichspannung am Ausgang des Umrichters 6.

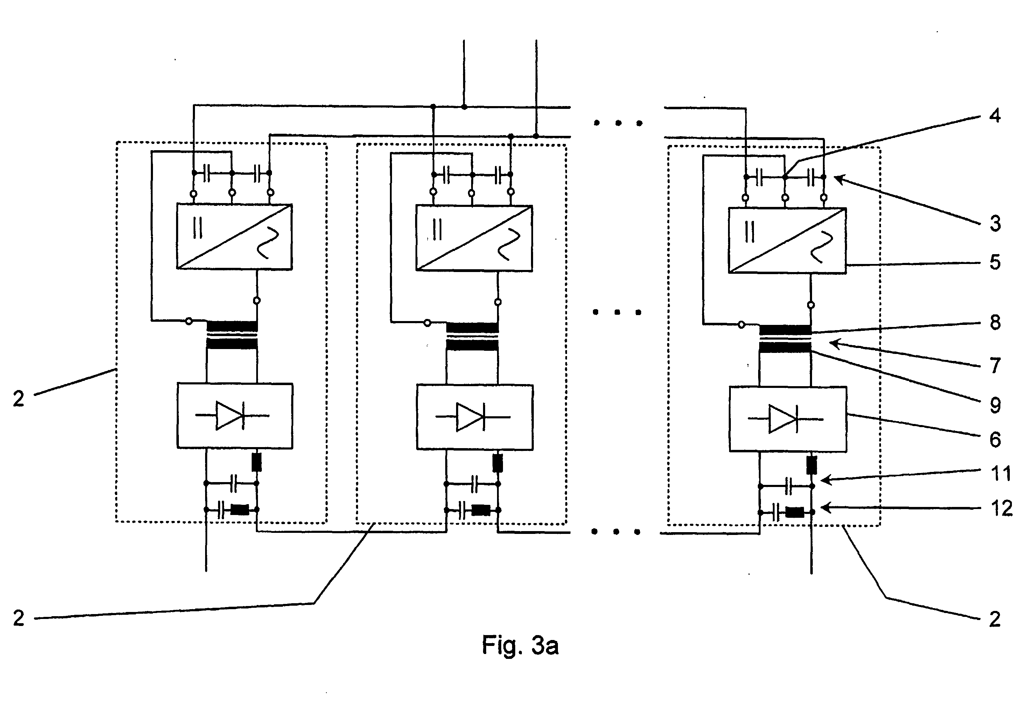

Wie vorstehend beschrieben, kann mit dem Stromrichtersystem durch ihren einfachen und kostengünstigen Aufbau und durch eine effiziente Erhöhung der Gleichspannung eine hohe Leistung übertragen werden. Gemäss einer in Fig. 3a dargestellten dritten Ausführungsform des erfindungsgemässen Stromrichtersystems ist das Stromrichtersystem durch mehrere Teilstromrichtersysteme 2 gebildet, wodurch vorteilhaft noch höhere Leistungen übertragen werden können. Gemäss Fig. 3a sind im Falle, dass das Stromrichtersystem durch mehrere Teilstromrichtersysteme 2 gebildet ist, die Teilstromrichtersysteme 2 ausgangsseitig in Reihe und eingangsseitig parallel geschaltet. Mittels der ausgangsseitigen Reihenschaltung der Teilstromrichtersysteme 2 addieren sich die einzelnen Teilgleichspannungen an den Ausgängen der Teilstromrichtersysteme 2 zu einer Gesamtgleichspannung, die dann zur Übertragung einer gewünschten hohen Leistung genutzt werden kann. Eine Anpassung an eine geforderte hohe Leistung ist durch Variation der Anzahl der Teilstromrichtersysteme 2 des Stromrichtersystems sehr einfach möglich.

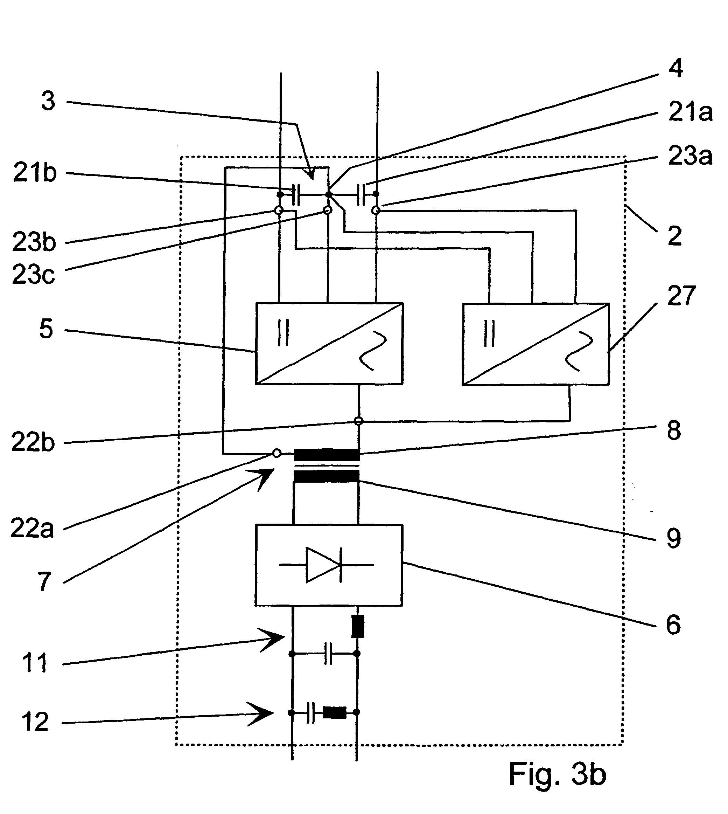

In einer in Fig. 3b gezeigten vierten Ausführungsform des erfindungsgemässen Stromrichtersystems ist ein zweiter Spannungswechselrichter 27 vorgesehen, der eingangsseitig mit dem ersten und zweiten Eingangsanschluss 23a, 23b des ersten Spannungswechselrichters 5 verbunden ist. Zudem ist der zweite Spannungswechselrichter 27 mit dem Mittelpunktanschluss 4 eingangseitig verbunden. Ausgangsseitig ist der zweite Spannungswechselrichter 27 an den zweiten Anschluss 22b der Primärwicklung 8 des Transformators 7 angeschlossen, so dass eine Parallelschaltung des zweiten Spannungswechselrichters 27 zu dem ersten Spannungswechselrichter 5 gebildet ist. Durch diese Parallelschaltung wird der Leistungsfluss des Stromrichtersystems eingangseitig auf die beiden Spannungswechselrichter 5, 27 aufgeteilt, so dass jeder einzelne Spannungswechselrichter 5, 27, insbesondere deren Schaltelemente, weniger stark belastet wird. Der zweite Spannungswechselrichter 27 ist ebenfalls, wie der erste Spannungswechselrichter 5, als Stufenschaltung zur Erzeugung dreier Schaltspannungsniveaus ausgebildet und weist somit den vorstehend beschriebenen Aufbau gemäss Fig. 4 auf. Es hat sich auch für den zweiten Spannungswechselrichter 27 als vorteilhaft erwiesen, die Schaltfrequenz der aktiven Schaltelemente des zweiten Spannungswechselrichters 27 im Bereich zwischen 300 Hz und 2000 Hz zu wählen, um die durch die Schaltvorgänge der aktiven Schaltelemente generierten Oberschwingungen möglichst gering zu halten.

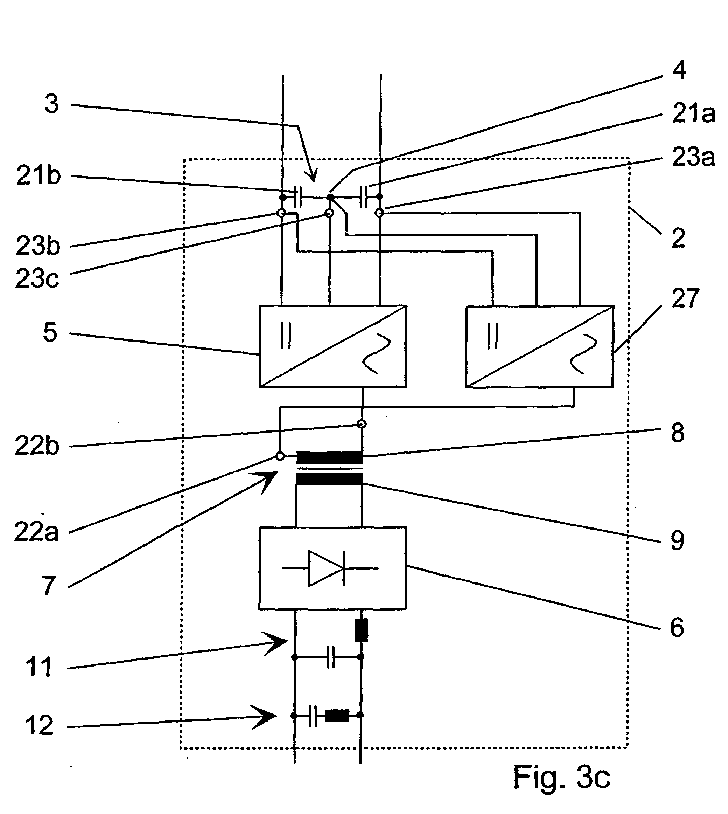

In einer in Fig. 3c gezeigten fünften Ausführungsform des erfindungsgemässen Stromrichtersystems ist der zweite Spannungswechselrichter 27 eingangsseitig mit dem ersten und zweiten Eingangsanschluss 23a, 23b des ersten Spannungswechselrichters 5 verbunden ist. Zudem ist der zweite Spannungswechselrichter 27 mit dem Mittelpunktanschluss 4 eingangseitig verbunden. Ausgangsseitig ist der zweite Spannungswechselrichter 27 anstelle des Mittelpunktanschlusses 4 an den ersten Anschluss 22a der Primärwicklung 8 des Transformators 7 angeschlossen, so dass eine Parallelschaltung des zweiten Spannungswechselrichters 27 zu dem ersten Spannungswechselrichter 5 gebildet ist. Durch diese Parallelschaltung wird der Leistungsfluss des Stromrichtersystems eingangseitig auf die beiden Spannungswechselrichter 5, 27 aufgeteilt, so dass jeder einzelne Spannungswechselrichter 5, 27, insbesondere deren Schaltelemente, weniger stark belastet wird. Der zweite Spannungswechselrichter 27 ist ebenfalls, wie der erste Spannungswechselrichter 5, als Stufenschaltung zur Erzeugung dreier Schaltspannungsniveaus ausgebildet und weist somit den vorstehend beschriebenen Aufbau gemäss Fig. 4 auf.

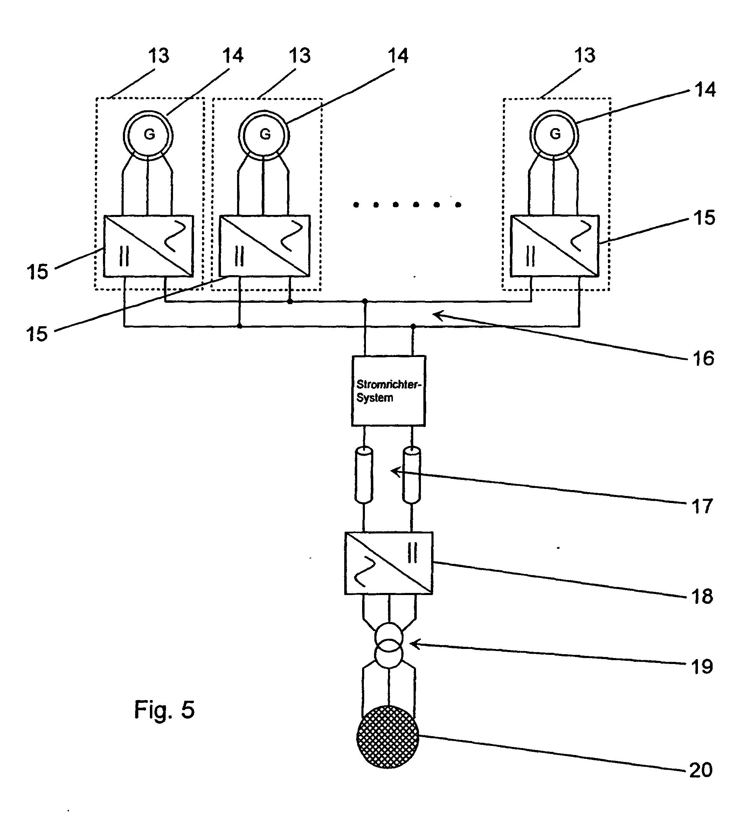

In Fig. 5 ist eine Ausführungsform eines erfindungsgemässen Windenergiesystems, insbesondere mit einem Gleichspannungsübertragungssystem 17 gezeigt. Das Windenergiesystem gemäss Fig. 5 umfasst mindestens eine Windenergieanlage 13, die je einen von einem der Übersichtlichkeit wegen in Fig. 5 nicht gezeigten Rotor angetriebenen Generator 14 aufweist, der über eine Gleichrichtereinheit 15 an das Gleichspannungsübertragungssystem 17 angeschlossen ist. Gemäss Fig. 5 ist das Gleichspannungsübertragungssystem 17 mit einer Stromrichternetzkopplungsstation 18 verbunden, die der Ankopplung über einen Netztransformator 19 an ein gängiges elektrisches Versorgungsnetz 20 dient.

Zur Verringerung der Verluste des Gleichspannungsübertragungssystems 17 des Windenergiesystems ist die Gleichrichtereinheit 15 über ein Stromrichtersystem nach der Erfindung zur Erhöhung der Gleichspannung, insbesondere der Übertragungsgleichspannung des Gleichspannungsübertragungssystems 17, mit dem Gleichspannungsübertragungssystem 17 verbunden. Diese Erhöhung der Übertragungsgleichspannung wirkt sich besonders vorteilhaft bei Gleichspannungsübertragungssystemen mit langen Übertragungswegen aus, wie sie oft bei Off-Shore Anwendungen von Windenergiesystemen vorkommen. Zum einem, da Verluste, insbesondere Wärmverluste, die bei zu niedriger Übertragungsgleichspannung durch einen grossen Strom bedingt durch die hohe zu übertragende Leistung hervorgerufen werden, bei einer erhöhten Übertragungsgleichspannung minimiert werden. Zum anderen, um Material, beispielsweise Leitungsmaterial einzusparen, welches bei zu niedriger Übertragungsgleichspannung und gleichzeitig hoher zu übertragender Leistung benötigt wird, um den entsprechend hohen Strom bewältigen zu können.

Gemäss Fig. 5 werden bei höheren Leistungen mehrere Windenergieanlagen 13 eingesetzt, wobei erfindungsgemäss die Gleichrichtereinheiten 15 über eine Gleichspannungsverschienung 16 parallel geschaltet sind, um vorteilhaft eine redundante Einspeisung der Gleichrichtereinheiten 15 zu erreichen

Bei dem erfindungsgemässen Windenergiesystem gemäss Fig. 5 hat es sich darüber hinaus als vorteilhaft erwiesen, dass der Umrichters 6 des Stromrichtersystems vorzugsweise aktive Schaltelemente und/oder passive Schaltelemente aufweist, wobei mittels aktiver Schaltelemente, insbesondere mittels ansteuerbarer Halbleiterschalter die Übertragungsgleichspannung vorteilhaft durch eine geeignete Ansteuerung in der Höhe variiert werden kann.

Bei Windenergiesystemen, die extremen Einflüssen wie Temperaturschwankungen und/oder Klima- und Umwelteinflüssen unterworfen sind, weist der Umrichters 6 vorzugsweise passive Schaltelemente, insbesondere Dioden auf. Durch den Einsatz von diesen passiven Schaltelementen wird erreicht, dass beispielsweise Ansteuerschaltungen für die Schaltelemente entfallen können, was insbesondere den Wartungsaufwand und eine mögliche Ausfallrate beispielsweise bei Off-Shore Anwendungen von Windenergiesystemen, welche wegen der auftretenden Wetterbedingungen im Meer nur zu bestimmten Jahreszeiten gewartet werden, erheblich verringert. Zudem wird die Erhöhung der Übertragungsgleichspannung sehr einfach und mit geringem Schaltungsaufwand erzielt, da eine mögliche Mitwirkung der Gleichrichtereinheit 15 an der Übertragungsgleichspannungserhöhung nicht erfolgt und damit ein erheblicher Kosten-, Isolations- und Schaltungsaufwand durch Neuauslegung und Austausch leistungselektronischer Schaltelemente der Gleichrichtereinheit 15 entfällt.

Es versteht sich, dass der Fachmann andere als die im Ausführungsbeispiel angegebenen Blöcke, Einheiten und Signale mit gleicher Wirkung verwenden kann.

### Bezugszeichenliste

- 2: Teilstromrichtersystem
- 3: Gleichspannungskreis
- 4: Mittelpunktanschluss
- 5: erster Spannungswechselrichter
- 6: Umrichter
- 7: Transformator
- 8: Primärseite
- 9: Sekundärseite
- 10: Resonanzkapazität
- 11: Gleichspannungsfilterschaltung
- 12: Oberschwingungsfilterschaltung
- 13: Windenergieanlage
- 14: Generator
- 15: Gleichrichtereinheit
- 16: Gleichspannungsverschienung
- 17: Gleichspannungsübertragungssystem
- 18: Stromrichtemetzkopplungsstation
- 19: Netztransformator
- 20: elektrisches Versorgungsnetz
- 21a, 21b: Gleichspannungskapazität
- 22a: erster Anschluss der Primärseite des Transformators
- 22b: zweiter Anschluss der Primärseite des Transformators
- 23a,: erster Eingangsanschluss des ersten Spannungswechselrichters
- 23b: zweiter Eingangsanschluss des ersten Spannungswechselrichters
- 23c: dritter Eingangsanschluss des ersten Spannungswechselrichters
- 24: Mittelpunktspannungsstufe
- 25: erste Schaltstufe
- 26: zweite Schaltstufe
- 27: zweiter Spannungswechselrichter

## Patentansprüche

1. Stromrichtersystem zur Erhöhung einer Gleichspannung gebildet durch mindestens ein Teilstromrichtersystem (2) mit einem an einen ersten Spannungswechselrichter (5) angeschlossenen eingangsseitigen Gleichspannungskreis (3) und einen durch mindestens zwei in Reihe geschalteten Gleichspannungskapazitäten (21a,21b) des Gleichspannungszwischenkreises (3) gebildeten Mittelpunktanschlusses (4), der an einen ersten Anschluss (22a) der Primärwicklung (8) eines Transformators (7) angeschlossen ist, dessen zweiter Anschluss (22b) der Primärwicklung (8) an den Ausgang des ersten Spannungswechselrichters (5) angeschlossen ist, wobei die Sekundärwicklung (9) des Transformators (7) mit dem Eingang eines ausgangsseitigen und zur Erzeugung einer ausgangsseitigen Gleichspannung vorgesehenen Umrichters (6) verbunden ist, und wobei der erste Spannungswechselrichter (5) mit einem ersten und einem zweiten Eingangsanschluss (23a; 23b) mit dem Gleichspannungszwischenkreis (3) verbunden ist und der Mittelpunktanschluss (4) über einen dritten Eingangsanschluss (23c) des ersten Spannungswechselrichters (5) mit einer Mittelpunktspannungsstufe (24) des als Stufenschaltung zur Erzeugung dreier Schaltspannungsniveaus ausgebildeten ersten Spannungswechselrichters (5) verbunden ist, **dadurch gekennzeichnet,**
**dass** ein zweiter Spannungswechselrichter (27) vorgesehen ist, der eingangsseitig mit dem ersten und zweiten Eingangsanschluss (23a; 23b) des ersten Spannungswechselrichters (5) und mit dem Mittelpunktanschluss (4) eingangseitig verbunden ist, und
**dass** der zweite Spannungswechselrichter (27) ausgangsseitig an den zweiten Anschluss (22b) der Primärwicklung (8) angeschlossen ist.

2. Stromrichtersystem zur Erhöhung einer Gleichspannung gebildet durch mindestens ein Teilstromrichtersystem (2) mit einem an einen ersten Spannungswechselrichter (5) angeschlossenen eingangsseitigen Gleichspannungskreis (3) und einen durch mindestens zwei in Reihe geschalteten Gleichspannungskapazitäten (21a, 21b) des Gleichspannungszwischenkreises (3) gebildeten Mittelpunktanschlusses (4), der an einen ersten Anschluss (22a) der Primärwicklung (8) eines Transformators (7) angeschlossen ist, dessen zweiter Anschluss (22b) der Primärwicklung (8) an den Ausgang des ersten Spannungswechselrichters (5) angeschlossen ist, wobei die Sekundärwicklung (9) des Transformators (7) mit dem Eingang eines ausgangsseitigen und zur Erzeugung einer ausgangsseitigen Gleichspannung vorgesehenen Umrichters (6) verbunden ist, und
wobei der erste Spannungswechselrichter (5) mit einem ersten und einem zweiten Eingangsanschluss (23a; 23b) mit dem Gleichspannungszwischenkreis (3) verbunden ist und der Mittelpunktanschluss (4) über einen dritten Eingangsanschluss (23c) des ersten Spannungswechselrichters (5) mit einer Mittelpunktspannungsstufe (24) des als Stufenschaltung zur Erzeugung dreier Schaltspannungsniveaus ausgebildeten ersten Spannungswechselrichters (5) verbunden ist, **dadurch gekennzeichnet,**
**dass** ein zweiter Spannungswechselrichter (27) vorgesehen ist, der eingangsseitig mit dem ersten und zweiten Eingangsanschluss (23a; 23b) des ersten Spannungswechselrichters (5) und mit dem Mittelpunktanschluss (4) eingangsseitig verbunden ist, und
**dass** anstelle des Mittelpunktanschlusses (4) der zweite Spannungswechselrichter (27) ausgangsseitig an den ersten Anschluss (22a) der Primärwicklung (8) angeschlossen ist.

3. Stromrichtersystem nach Anspruch 1 oder 2, **dadurch gekennzeichnet, dass** die Mittelpunktspannungsstufe (24) mit einer ersten zur Erzeugung eines positiven Schaltspannungsniveaus vorgesehenen Schaltstufe (25) der Stufenschaltung verbunden ist, und dass der Gleichspannungszwischenkreis (3) über den ersten Eingangsanschluss (23a) des ersten Spannungswechselrichters (5) mit der ersten Schaltstufe (25) verbunden ist.

4. Stromrichtersystem nach einem der Ansprüche 1 bis 3, **dadurch gekennzeichnet, dass** die Mittelpunktspannungsstufe (24) mit einer zweiten zur Erzeugung eines negativen Schaltspannungsniveaus vorgesehenen Schaltstufe (26) der Stufenschaltung verbunden ist, und dass der Gleichspannungszwischenkreis (3) über den zweiten Eingangsanschluss (23b) des ersten Spannungswechselrichters (5) mit der zweiten Schaltstufe (26) verbunden ist.

5. Stromrichtersystem nach einem der vorhergehenden Ansprüche, **dadurch gekennzeichnet, dass** die Schaltfrequenz der aktiven Schaltelemente des ersten Spannungswechselrichters (5) im Bereich zwischen 300 Hz und 3000 Hz gewählt ist.

6. Stromrichtersystem nach einem der vorhergehenden Ansprüche, **dadurch gekennzeichnet, dass** die Schaltfrequenz der aktiven Schaltelemente des zweiten Spannungswechselrichters (27) im Bereich zwischen 300 Hz und 3000 Hz gewählt ist.

7. Stromrichtersystem nach einem der vorhergehenden Ansprüche, **dadurch gekennzeichnet, dass** das Übersetzungsverhältnis zwischen der Primärseite (8) und der Sekundärseite (9) des Transformators (7) im Bereich zwischen 1:5 und 1: 50 gewählt ist.

8. Stromrichtersystem nach einem der vorhergehenden Ansprüche, **dadurch gekennzeichnet, dass** der erste Spannungswechselrichter (5) über eine Resonanzkapazität (10) mit dem zweiten Anschluss (22b) der Primärwicklung des Transformators (7) verbunden ist.

9. Stromrichtersystem nach einem der vorhergehenden Ansprüche, **dadurch gekennzeichnet, dass** der Ausgang des Umrichters (6) mit einer Gleichspannungsfilterschaltung (11) verbunden ist, die eine Gleichspannungsfilterinduktivität und eine Gleichspannungsfilterkapazität aufweist.

10. Stromrichtersystem nach Anspruch 9, **dadurch gekennzeichnet, dass** eine parallel zur Gleichspannungsfilterschaltung (11) geschaltete Oberschwingungsfilterschaltung (12) vorgesehen ist, die einen auf eine Oberschwingungsfrequenz abgestimmten Serienschwingkreis aufweist.

11. Stromrichtersystem nach einem der vorhergehenden Ansprüche, **dadurch gekennzeichnet, dass** die Teilstromrichtersysteme (2) ausgangsseitig in Reihe geschaltet sind, und dass die Teilstromrichtersysteme (2) eingangsseitig parallel geschaltet sind.

12. Windenergiesystem mit mindestens einer Windenergieanlage (13), die je einen von einem Rotor angetriebenen Generator (14) aufweist, der über eine Gleichrichtereinheit (15) an ein Gleichspannungsübertragungssystem (17) angeschlossen ist, das mit einer Stromrichternetzkopplungsstation (18) verbunden ist, die über einen Netztransformator (19) an ein elektrisches Versorgungsnetz (20) angekoppelt ist, **dadurch gekennzeichnet, dass** die Gleichrichtereinheit (15) über ein zur Erhöhung einer Gleichspannung vorgesehenes Stromrichtersystem nach einem der Ansprüche 1 bis 11, mit dem Gleichspannungsübertragungssystem (17) verbunden ist.

13. Windenergiesystem nach Anspruch 12, **dadurch gekennzeichnet, dass** die Gleichrichtereinheiten (15) mehrerer Windenergieanlagen (18) über eine Gleichspannungsverschienung parallel geschaltet sind.

14. Windenergiesystem nach Anspruch 12 oder 13, **dadurch gekennzeichnet, dass** der Umrichter (6) des Stromrichtersystems passive Schaltelemente, insbesondere Dioden, und/oder aktive Schaltelemente, insbesondere ansteuerbare Halbleiterschalter, aufweist.

## Claims

1. Converter system for increasing a DC voltage, formed by at least one converter system element (2) having an input-side DC circuit (3) connected to a first voltage inverter (5), and by a centre point connection (4), which is formed by at least two series-connected DC capacitances (21a, 21b) in the DC intermediate circuit (3) and is connected to a first connection (22a) of the primary winding (8) of a transformer (7), whose second connection (22b) of the primary winding (8) is connected to the output of the first voltage inverter (5), with the secondary winding (9) of the transformer (7) being connected to the input of an output-side converter (6) which is provided for producing an output-side DC voltage, and
with the first voltage inverter (5) being connected by means of a first and a second input connection (23a; 23b) to the DC intermediate circuit (3), and the centre point connection (4) being connected via a third input connection (23c) of the first voltage inverter (5) to a centre point voltage stage (24) of the first voltage inverter (5), which is in the form of a stepping circuit for producing three switching voltage levels, **characterized in that** a second voltage inverter (27) is provided, which is connected on the input side to the first and second input connections (23a, 23b) of the first voltage inverter (5) and to the centre point connection (4), and **in that** the second voltage inverter (27) is connected on the output side to the second connection (22b) of the primary winding (8).

2. Converter system for increasing a DC voltage, formed by at least one converter system element (2) having an input-side DC circuit (3) connected to a first voltage inverter (5), and by a centre point connection (4), which is formed by at least two series-connected DC capacitances (21a, 21b) in the DC intermediate circuit (3) and is connected to a first connection (22a) of the primary winding (8) of a transformer (7), whose second connection (22b) of the primary winding (8) is connected to the output of the first voltage inverter (5), with the secondary winding (9) of the transformer (7) being connected to the input of an output-side converter (6) which is provided for producing an output-side DC voltage, and
with the first voltage inverter (5) being connected by means of a first and a second input connection (23a; 23b) to the DC intermediate circuit (3), and the centre point connection (4) being connected via a third input connection (23c) of the first voltage inverter (5) to a centre point voltage stage (24) of the first voltage inverter (5), which is in the form of a stepping circuit for producing three switching voltage levels, **characterized in that** a second voltage inverter (27) is provided, which is connected on the input side to the first and second input connections (23a, 23b) of the first voltage inverter (5) and to the centre point connection (4), and **in that** instead of the centre point connection (4) the second voltage inverter (27) is connected on the output side to the first connection (22b) of the primary winding (8).

3. Converter system according to Claim 1 or 2, **characterized in that** the centre point voltage stage (24) is connected to a first switching stage (25), which is provided for producing a positive switching voltage level, of the stepping circuit, and **in that** the DC intermediate circuit (3) is connected via the first input connection (23a) of the first voltage inverter (5) to the first switching stage (25).

4. Converter system according to one of Claims 1 to 3, **characterized in that** the centre point voltage stage (24) is connected to a second switching stage (26), which is provided for producing a negative switching voltage level, of the stepping circuit, and **in that** the DC intermediate circuit (3) is connected via the second input connection (23b) of the first voltage inverter (5) to the second switching stage (26).

5. Converter system according to one of the preceding claims, **characterized in that** the switching frequency of the active switching elements in the first voltage inverter (5) is chosen to be in the range between 300 Hz and 3000 Hz.

6. Converter system according to one of the preceding claims, **characterized in that** the switching frequency of the active switching elements in the second voltage inverter (27) is chosen to be in the range between 300 Hz and 3000 Hz.

7. Converter system according to one of the preceding claims, **characterized in that** the transformation ratio between the primary (8) and the secondary (9) of the transformer (7) is chosen to be in the range between 1:5 and 1:50.

8. Converter system according to one of the preceding claims, **characterized in that** the first voltage inverter (5) is connected via a resonant capacitance (10) to the second connection (22b) of the primary winding of the transformer (7).

9. Converter system according to one of the preceding claims, **characterized in that** the output of the converter (6) is connected to a DC filter circuit (11), which has a DC filter inductance and a DC filter capacitance.

10. Converter system according to Claim 9, **characterized in that** a harmonic filter circuit (12) is provided, is connected in parallel with the DC filter circuit (11) and has a series tuned circuit which is tuned to a harmonic frequency.

11. Converter system according to one of the preceding claims, **characterized in that** the converter system elements (2) are connected in series on the output side, and **in that** the converter system elements (2) are connected in parallel on the input side.

12. Wind power system having at least one wind power installation (13), each of which has a generator (14) which is driven by a rotor and is connected via a rectifier unit (15) to a DC transmission system (17) which is connected to a converter network coupling station (18), which is coupled via a network transformer (19) to an electrical supply network (20), **characterized**
**in that** the rectifier unit (15) is connected to the DC transmission system (17) via a converter system which is provided for increasing a DC voltage according to one of Claims 1 to 11.

13. Wind power system according to Claim 12, **characterized in that** the converter units (15) of a number of wind power installations (18) are connected in parallel via a DC busbar system.

14. Wind power system according to Claim 12 or 13, **characterized in that** the converter (6) of the converter system has passive switching elements, in particular diodes, and/or active switching elements, in particular controllable semiconductor switches.

## Revendications

1. Système à convertisseur statique destiné à élever une tension continue formé par au moins un système à convertisseur statique partiel (2) comprenant un circuit à tension continue (3) raccordé à l'entrée d'un premier onduleur de tension (5) et une borne de point central (4) formée par au moins deux condensateurs à tension continue (21a, 21b) du circuit intermédiaire de tension continue (3) branchés en série, laquelle est raccordée à une première borne (22a) de l'enroulement primaire (8) d'un transformateur (7) dont la deuxième borne (22b) de l'enroulement primaire (8) est raccordée à la sortie du premier onduleur de tension (5), l'enroulement secondaire (9) du transformateur (7) étant relié à l'entrée d'un convertisseur (6) du côté de la sortie et prévu pour produire une tension continue en sortie, et le premier onduleur de tension (5) étant relié par une première et par une deuxième borne d'entrée (23a, 23b) avec le circuit intermédiaire de tension continue (3) et la borne de point central (4) étant reliée par le biais d'une troisième borne d'entrée (23c) du premier onduleur de tension (5) à un étage de tension à point central (24) du premier onduleur de tension (5) réalisé sous la forme d'un circuit étagé pour produire trois niveaux de tension commutée, **caractérisé en ce qu'**il est prévu un deuxième onduleur de tension (27) dont l'entrée est reliée à la première et à la deuxième borne d'entrée (23a, 23b) du premier onduleur de tension (5) et dont l'entrée est reliée à la borne de point central (4), et que le deuxième onduleur de tension (27) est relié par sa sortie à la deuxième borne (22b) de l'enroulement primaire (8).

2. Système à convertisseur statique destiné à élever une tension continue formé par au moins un système à convertisseur statique partiel (2) comprenant un circuit à tension continue (3) raccordé à l'entrée d'un premier onduleur de tension (5) et une borne de point central (4) formée par au moins deux condensateurs à tension continue (21a, 21b) du circuit de tension continue (3) branchés en série, laquelle est raccordé. à une première borne (22a) de l'enroulement primaire (8) d'un transformateur (7) dont la deuxième borne (22b) de l'enroulement primaire (8) est raccordée à la sortie du premier onduleur de tension (5), l'enroulement secondaire (9) du transformateur (7) étant relié à l'entrée d'un convertisseur (6) du côté de la sortie et prévu pour produire une tension continue en sortie, et le premier onduleur de tension (5) étant relié par une première et par une deuxième borne d'entrée (23a, 23b) avec le circuit intermédiaire de tension continue (3) et la borne de point central (4) étant reliée par le biais d'une troisième borne d'entrée (23c) du premier onduleur de tension (5) à un étage de tension à point central (24) du premier onduleur de tension (5) réalisé sous la forme d'un circuit étagé pour produire trois niveaux de tension commutée, **caractérisé en ce qu'**il est prévu un deuxième onduleur de tension (27) dont l'entrée est reliée à la première et à la deuxième borne d'entrée (23a, 23b) du premier onduleur de tension (5) et dont l'entrée est reliée à la borne de point central (4), et qu'au lieu de la borne de point central (4), la sortie du deuxième onduleur de tension (27) est raccordée à la première borne (22a) de l'enroulement primaire (8).

3. Système à convertisseur statique selon la revendication 1 ou 2, **caractérisé en ce que** l'étage de tension à point central (24) est relié à un premier étage de commutation (25) du circuit étagé prévu pour produire un niveau de tension commutée positif et que le circuit intermédiaire de tension continue (3) est relié avec le premier étage de commutation (25) par le biais de la première borne d'entrée (23a) du premier onduleur de tension (5).

4. Système à convertisseur statique selon l'une des revendications 1 à 3, **caractérisé en ce que** l'étage de tension à point central (24) est relié à un deuxième étage de commutation (26) du circuit étagé prévu pour produire un niveau de tension commutée négatif et que le circuit intermédiaire de tension continue (3) est relié avec le deuxième étage de commutation (26) par le biais de la deuxième borne d'entrée (23b) du premier onduleur de tension (5).

5. Système à convertisseur statique selon l'une des revendications précédentes, **caractérisé en ce que** la fréquence de commutation des éléments de commutation actifs du premier onduleur de tension (5) est choisie dans la plage entre 300 Hz et 3000 Hz.

6. Système à convertisseur statique selon l'une des revendications précédentes, **caractérisé en ce que** la fréquence de commutation des éléments de commutation actifs du deuxième onduleur de tension (27) est choisie dans la plage entre 300 Hz et 3000 Hz.

7. Système à convertisseur statique selon l'une des revendications précédentes, **caractérisé en ce que** le rapport de conversion entre le côté primaire (8) et le côté secondaire (9) du transformateur (7) est choisi entre 1:5 et 1:50.

8. Système à convertisseur statique selon l'une des revendications précédentes, **caractérisé en ce que** le premier onduleur de tension (5) est relié par le biais d'un condensateur de résonance (10) avec la deuxième borne (22b) de l'enroulement primaire du transformateur (7).

9. Système à convertisseur statique selon l'une des revendications précédentes, **caractérisé en ce que** la sortie du convertisseur (6) est reliée à un circuit de filtrage de tension continue (11) qui présente une inductance de filtrage de tension continue et un condensateur de filtrage de tension continue.

10. Système à convertisseur statique selon la revendication 9, **caractérisé en ce qu'**il est prévu un circuit de filtrage des harmoniques (12) branché en parallèle avec le circuit de filtrage de tension continue (11), lequel présente un circuit oscillant série accordé sur une fréquence d'harmonique.

11. Système à convertisseur statique selon l'une des revendications précédentes, **caractérisé en ce que** les systèmes à convertisseur statique partiels (2) sont branchés en série du côté de leurs sorties et que les systèmes à convertisseur statique partiels (2) sont branchés en parallèle du côté de leurs entrées.

12. Système à énergie éolienne comprenant au moins un équipement à énergie éolienne (13) qui présente un alternateur (14) entraîné par un rotor, lequel est raccordé par le biais d'un module redresseur (15) à un système de transmission de tension continue (17) qui est relié à une station de connexion au réseau d'un convertisseur statique (18), lequel est connecté à un réseau d'alimentation électrique (20) par le biais d'un transformateur de réseau (19), **caractérisé en ce que** le module redresseur (15) est relié au système de transmission de tension continue (17) par le biais d'un système à convertisseur statique destiné à élever une tension continue selon l'une des revendications 1 à 11.

13. Système à énergie éolienne selon la revendication 12, **caractérisé en ce que** les modules redresseurs (15) de plusieurs équipements à énergie éolienne (18) sont branchés en parallèle par le biais d'une barre bus à tension continue.

14. Système à énergie éolienne selon la revendication 12 ou 13, **caractérisé en ce que** le convertisseur (6) du système à convertisseur statique présente des éléments de commutation passifs, notamment des diodes et/ou des éléments de commutation actifs, notamment des commutateurs à semi-conducteur commandables.
